# EUROPEAN PATENT APPLICATION

(11) **EP 2 958 222 A1**
(43) Date of publication of application: **23.12.2015**
(21) Application number: 14751362.6
(22) Date of filing: 13.02.2014
(51) Int. Cl.: H02M 3/00, B60K 1/04, B60L 11/18, H01M 10/44, H02J 7/00, H02M 7/12

(54) **POWER SUPPLY DEVICE, ON-BOARD POWER SUPPLY DEVICE, AND ELECTRIC AUTOMOBILE**

(30) Priority: 13.02.2013 JP 2013025909; 06.03.2013 JP 2013044154
(71) Applicant: Panasonic Intellectual Property Management Co., Ltd., Osaka-shi, Osaka 540-6207 (JP)
(72) Inventor: SATOH, Nobuaki, Osaka 540-6207 (JP); ISHII, Toshiki, Osaka 540-6207 (JP); NAKAYA, Satoshi, Osaka 540-6207 (JP); KYOJO, Hiroyuki, Osaka 540-6207 (JP)
(74) Representative: Schwabe - Sandmair - Marx
(86) International application number: PCT/JP2014/000736
(87) International publication number: WO 2014/125821

(57) **Abstract**

A power supply apparatus includes: a power supply circuit; and a control section, the power supply circuit including a power factor improvement circuit that improves a power factor of alternating-current electrical energy by switching of a transistor; and a DC/DC conversion apparatus that converts by switching of a transistor at least one of a voltage and a current of the electrical energy whose power factor is improved by the power factor improvement circuit, the control section being configured to control switching timings of the power factor improvement circuit and the DC/DC conversion apparatus, wherein the number of the power supply circuit is N, and the control section controls the switching timings such that the switching timing of the power factor improvement circuit differs among the N power supply circuits, and that the switching timing of the DC/DC conversion apparatus differs among the N power supply circuits.

## Description

### Technical Field

The present invention relates to a power supply apparatus, an in-vehicle power supply apparatus and an electric automobile that charge a storage battery apparatus with alternating-current electrical energy supplied from an alternating current power supply.

### Background Art

Conventionally, power supply apparatuses having one power factor improvement circuit and one DC/DC conversion apparatus are known (see, for example, PTL 1). In addition, conventionally, vehicles having an alternating-current charging port for receiving supply of alternating-current electrical energy from a commercial alternating-current power supply are known (see, for example, PTL 2). In the following, a circuit having one power factor improvement circuit and one DC/DC conversion apparatus is referred to as "power supply circuit."

PTL 2 is directed to charging a vehicle such as an EV (Electric Vehicle) or a PHEV (Plug-in Hybrid Electric Vehicle) which can travel using an electrical energy as its driving source for example. In PTL 2, alternating-current electrical energy supplied from an alternating-current charging port is converted into direct-current electrical energy with a power supply apparatus disclosed in PTL 1 to charge a storage battery apparatus, for example.

### Citation List

### Patent Literature

PTL 1
   Japanese Patent Application Laid-Open No. 8-172773
PTL 2
   Japanese Patent Application Laid-Open No. 2011-126441

### Summary of Invention

### Technical Problem

In electric automobiles such as EVs and PHEVs, storage battery apparatuses of various capacities are mounted in accordance with their properties such as the vehicle size and the maximum drivable distance on the basis of the vehicle type.

In the case where a storage battery apparatus having a large capacity is charged, a power supply apparatus having a large output power to the storage battery apparatus is desired.

An object of the present invention is to provide a power supply apparatus having a large output power to a storage battery apparatus.

### Solution to Problem

A power supply apparatus according to claim 1 of the present invention includes: a power supply circuit; and a control section, the power supply circuit including a power factor improvement circuit that improves a power factor of alternating-current electrical energy by switching of a transistor; and a DC/DC conversion apparatus that converts by switching of a transistor at least one of a voltage and a current of the electrical energy whose power factor is improved by the power factor improvement circuit, the control section being configured to control switching timings of the power factor improvement circuit and the DC/DC conversion apparatus, wherein a plurality of (or N, which is an integer of 2 or greater) the power supply circuits are provided, and the control section controls the switching timings such that the switching timing of the power factor improvement circuit differs among the N power supply circuits, and that the switching timing of the DC/DC conversion apparatus differs among the N power supply circuits.

### Advantageous Effects of Invention

According to claim 1 of the present invention, since a plurality of (or N, which is an integer of 2 or greater) power supply circuits are provided, a power supply apparatus having an output power can be provided even when the output power of each power supply circuit is small. In addition, since the switching timings of the power factor improvement circuits differ among the N power supply circuits and the switching timings of the DC/DC conversion apparatuses differ among the N power supply circuits, the switching timings do not coincide with each other among the N power supply circuits, and thus electromagnetic noise due to the switching can be reduced.

### Brief Description of Drawings

FIG. 1 illustrates an in-vehicle power supply apparatus according to Embodiment 1 of the present invention and its surrounding configurations;
FIG. 2 illustrates configurations of a power factor improvement circuit and a DC/DC converter according to Embodiment 1 of the present invention;
FIG. 3 is a timing chart of a control timing according to Embodiment 1 of the present invention;
FIG. 4 is a timing chart of a control timing according to Embodiment 2 of the present invention;
FIG. 5 illustrates an in-vehicle power supply apparatus according to Embodiment 3 of the present invention and its surrounding configurations;
FIG. 6 illustrates an in-vehicle power supply apparatus according to Embodiment 4 of the present invention and its surrounding configurations;
FIG. 7 illustrates an in-vehicle power supply apparatus according to Embodiment 5 of the present invention and its surrounding configurations;
FIG. 8 illustrates a power factor improvement circuit according to Embodiment 5 of the present invention; and
FIG. 9 illustrates a modification of the in-vehicle power supply apparatus according to Embodiment 5 of the present invention.

### Description of Embodiments

In the following, embodiments of the present invention will be described in detail with reference to the accompanying drawings. It is to be noted that, in the drawings illustrating the embodiments, the same elements are denoted by the same reference numerals, and reiterated descriptions may be omitted.

### <Background and Problems of Embodiments 1 to 4>

Regarding charging of storage battery apparatuses of various capacities including a storage battery apparatus having a large capacity, it is advantageous in terms of cost to design a power supply circuit for vehicles whose storage battery apparatus has a relatively small capacity, and to use a plurality of the power supply circuits designed for the small vehicle in parallel for vehicles whose storage battery apparatus has a large capacity.

However, the configuration in which a plurality of power supply circuits are mounted has the following problems. The power supply circuit includes a power factor improvement circuit and a DC/DC conversion apparatus. The power factor improvement circuit improves the power factor of alternating-current electrical energy by switching of a transistor. Likewise, the DC/DC conversion apparatus converts at least one of the voltage and the current of the electrical energy whose power factor has been improved by the power factor improvement circuit by switching of a transistor.

Both the power factor improvement circuit and the DC/DC conversion apparatus utilize switching of a transistor. When the switching timings coincide with each other among the power supply circuits connected in parallel, electromagnetic noise is disadvantageously generated.

Such generation of electromagnetic noise is significant in electric automobiles such as EVs and PHEVs in which a high-capacity storage battery apparatus is charged. The electromagnetic noise thus generated has an influence on electronic apparatuses (such as a radio and a car navigation system) mounted in the vehicle.

An object of Embodiments 1 to 4 is to achieve reduction of electromagnetic noise due to switching in a power supply apparatus having N (N is an integer of 2 or greater) power supply circuits.

### (Embodiment 1)

### <Configuration of In-vehicle Power supply apparatus>

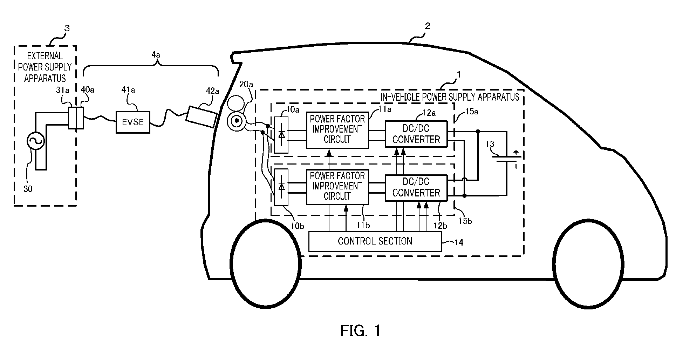

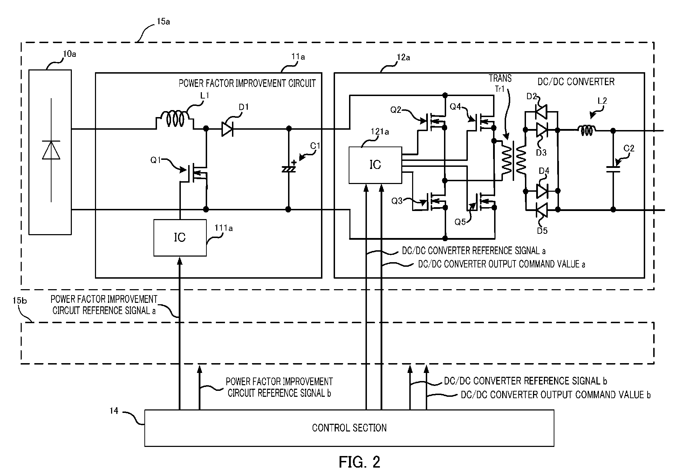

In-vehicle power supply apparatus 1 (which corresponds to a power supply apparatus) according to Embodiment 1 of the present invention and its surrounding configurations will be described with reference to FIG. 1 and FIG. 2. FIG. 1 illustrates an in-vehicle power supply apparatus according to Embodiment 1 of the present invention and its surrounding configurations. FIG. 2 illustrates configurations of a power factor improvement circuit and a DC/DC converter.

In-vehicle power supply apparatus 1 is mounted in vehicle 2. In-vehicle power supply apparatus 1 includes a plurality of power supply circuits (15a and 15b), storage battery apparatus 13, and control section 14.

Power supply circuit 15a includes rectifier circuit 10a, power factor improvement circuit 11a, and DC/DC converter 12a. In addition, power supply circuit 15b includes rectifier circuit 10b, power factor improvement circuit 11b, and DC/DC converter 12b.

Vehicle 2 is a vehicle such as an EV and a PHEV which can travel using electrical energy stored in a storage battery apparatus as its driving source. In-vehicle power supply apparatus 1 converts alternating-current electrical energy supplied from external power supply apparatus 3, which is disposed outside vehicle 2, through alternating-current charging port 20a of vehicle 2 into direct-current electrical energy at a plurality of power supply circuits (15a and 15b), and charges storage battery apparatus 13 mounted in vehicle 2. Vehicle 2 and external power supply apparatus 3 are electrically connected to each other through charging cable 4a.

External power supply apparatus 3 includes commercial power supply 30 for supplying alternating-current electrical energy. Commercial power supply 30 is electrically connected with connector 31a. In the following, the configuration of each component will be described in detail.

Rectifier circuit 10a includes a bridge diode. The alternating-current electrical energy supplied to rectifier circuit 10a through alternating-current charging port 20a is fully rectified by rectifier circuit 10a and converted into a pulsating current power factor before being output to improvement circuit 11a. The configuration of rectifier circuit 10b is similar to that of rectifier circuit 10a.

Next, power factor improvement circuit 11a is described in detail. By switching of a transistor, power factor improvement circuit 11a improves the power factor of the alternating-current electrical energy supplied from alternating-current charging port 20a through rectifier circuit 10a. The alternating-current electrical energy supplied from alternating-current charging port 20a is converted into direct-current electrical energy via rectifier circuit 10a and power factor improvement circuit 11a.

As illustrated in FIG. 2, power factor improvement circuit 11a includes IC 111a, choke coil L1, diode D1, capacitor C1, and switching transistor Q1. The operation of the power factor improvement is controlled by control section 14.

Power factor improvement circuit reference signal a output by control section 14 described later is input to IC 111a. IC 111a controls on or off of switching transistor Q1 based on power factor improvement circuit reference signal a, thereby improving the power factor. The configuration of power factor improvement circuit 11b is similar to that of power factor improvement circuit 11a.

DC/DC converter 12a (which corresponds to a DC/DC conversion apparatus) is an apparatus that converts at least one of the voltage and the current of the electrical energy whose power factor has been improved by power factor improvement circuit 11a by switching of a transistor under the control of control section 14.

As illustrated in FIG. 2, DC/DC converter 12a includes IC 121a, switching transistors Q2 to Q5, trans Tr1, diodes D2 to D5, coil L2, and capacitor C2.

The output of power factor improvement circuit 11a is switched by switching transistors Q2 to Q5, and input to trans Tr1. The output of trans Tr1 is output from the output terminal of DC/DC converter 12a via diodes D2 to D5, coil L2, and capacitor C2 in this order.

Trans Tr1 plays a role of ensuring the insulation between storage battery apparatus 13 and the body of vehicle 2, and performing voltage conversion. In addition, diodes D2 to D5 play a role of rectifying the output switched by switching transistors Q2 to Q5. In addition, coil L2 and capacitor C2 serve as a low-pass filter, and play a role of reducing the ripple component generated by switching transistors Q2 to Q5.

DC/DC converter reference signal a output by control section 14 described later is input to IC 121a. IC 121a controls on or off of switching transistors Q2 to Q5 based on

### DC/DC converter reference signal a.

It is to be noted that the configuration of DC/DC converter 12b is similar to that of DC/DC converter 12a.

Storage battery apparatus 13 is an apparatus such as a lead battery, a nickel hydrogen battery and a lithium ion battery that stores electrical energy through a chemical reaction. The electrical energy accumulated in storage battery apparatus 13 is supplied to an electric motor not illustrated, so as to be used for driving vehicle 2.

As described above, control section 14 controls power factor improvement circuit 11a, and DC/DC converter 12a. In addition, control section 14 can detect whether charging plug 42a is inserted to alternating-current charging port 20a. As such, alternating-current charging port 20a is provided with an insert/extract sensor not illustrated.

In addition, control section 14 controls power supply circuits (15a and 15b) in accordance with the state of storage battery apparatus 13. Further, through the communication with EVSE 41a, control section 14 can receive a signal that indicates whether EVSE 41a is normally operating.

Control section 14 is configured as an LSI that is an integrated circuit such as a microcomputer, for example. The type of the integrated circuit is not limited to LSI, and a dedicated circuit or a general-purpose processor may also be adopted.

In addition, control section 14 controls the switching timings of power factor improvement circuits 11a and 11b, and DC/DC converters 12a and 12b. To be more specific, control section 14 synchronously controls the switching timings of power factor improvement circuits (11a and 11b) and the switching timings of DC/DC converters (12a and 12b) on the basis of each of power supply circuits (15a and 15b).

Control section 14 controls the switching timing of power factor improvement circuit 11a, and the switching timing of DC/DC converter 12a at the same timing. In addition, control section 14 controls the switching timing of power factor improvement circuit 11b, and the switching timing of DC/DC converter 12b at the same timing. That is, control section 14 controls the switching timings of the power factor improvement circuit and the DC/DC converter at same timing in each power supply circuit.

Further, control section 14 controls the switching timing of power factor improvement circuit 11a with power factor improvement circuit reference signal a illustrated in FIG. 2, and controls the switching timing of power factor improvement circuit 11b with power factor improvement circuit reference signal b illustrated in FIG. 2. Power factor improvement circuit reference signal a and power factor improvement circuit reference signal b correspond to a first reference signal.

To be more specific, control section 14 controls the timings such that the switching timings of the power factor improvement circuits differ from each other between power supply circuits (15a and 15b). That is, the switching timings of power factor improvement circuit 11a and power factor improvement circuit 11b are controlled such that the timings are different from each other.

Further, control section 14 controls the switching timing of DC/DC converter 12a with DC/DC converter reference signal a illustrated in FIG. 2, and controls the switching timing of DC/DC converter 12b with DC/DC converter reference signal b illustrated in FIG. 2. DC/DC converter reference signal a and DC/DC converter reference signal b correspond to a second reference signal.

To be more specific, control section 14 controls the timings such that the switching timings of the DC/DC converters differ from each other between power supply circuits (15a and 15b). That is, the switching timings of DC/DC converter 12a and DC/DC converter 12b are controlled such that the timings are different from each other.

Further, control section 14 controls at least one of the values of an output current and an output voltage of DC/DC converter 12a with DC/DC converter output command value a illustrated in FIG. 2, and controls at least one of the values of an output current and an output voltage of DC/DC converter 12b with DC/DC converter output command value b illustrated in FIG. 2. To be more specific, control section 14 controls the values such that at least one of values of the output current and the output voltage of DC/DC converters 12a and 12b is identical to each other between power supply circuits (15a and 15b).

In vehicle 2, in-vehicle power supply apparatus 1 is mounted, and alternating-current charging port 20a is provided at the body. Charging cable 4a described later is connected to alternating-current charging port 20a, and alternating-current electrical energy is supplied from external power supply apparatus 3.

Next, charging cable 4a will be described. Charging cable 4a includes connector 40a, EVSE 41a, and charging plug 42a.

Connector 40a is electrically connected with charging plug 42a through EVSE 41a. Connector 40a is electrically connected with connector 31a of external power supply apparatus 3 when in use. In addition, charging plug 42a is electrically connected with alternating-current charging port 20a of in-vehicle power supply apparatus 1 when in use.

EVSE (Electric Vehicle Supply Equipment) is an apparatus that couples external power supply apparatus 3 and in-vehicle power supply apparatus 1. In EVSE 41a, a diagnosis section and a relay not illustrated are provided. The diagnosis section has a function of, in a case where abnormality such as leakage is detected, bringing the relay into an opened state so as not to allow the electrical energy supplied from connector 40a to be transmitted to charging plug 42a side, and notifying control section 14 of the abnormality. In addition, when no abnormality is detected, the diagnosis section brings the relay into a closed state to transmit the electrical energy supplied from connector 40a to charging plug 42a side.

### <Operation of In-vehicle Power supply apparatus>

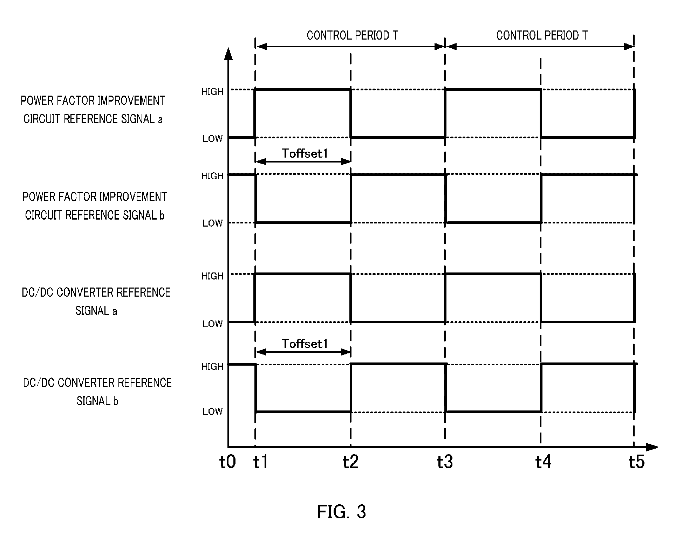

Next, an operation of in-vehicle power supply apparatus 1 will be described in detail with reference to FIG. 3. FIG. 3 is a timing chart of a control timing according to Embodiment 1 of the present invention.

When insertion of charging plug 42a to alternating-current charging port 20a is detected, control section 14 controls power factor improvement circuits 11a and 11b to perform power factor improvement.

Control section 14 controls switching timings of power factor improvement circuits 11a and 11b, and DC/DC converters 12a and 12b in predetermined control period T.

Power factor improvement circuit reference signal a and DC/DC converter reference signal a are reference signals that are controlled at the same timing. Power factor improvement circuit reference signal a and DC/DC converter reference signal a rise (go HIGH) at time t1, go LOW at one-half of control period T (time t2), and again rise (go HIGH) upon elapse of control period T from time t1.

In addition, power factor improvement circuit reference signal b, and DC/DC converter reference signal b are controlled at the same timing.

Power factor improvement circuit reference signal b is a reference signal that rises (goes HIGH) at a time point (t2), that is, upon elapse of Toffset1 (1/2 of control period T) from that of power factor improvement circuit reference signal a. Likewise, DC/DC converter reference signal b is a reference signal that rises (goes HIGH) at a time point (t2), that is, upon elapse of Toffset1 (control period T 1/2) from that of DC/DC converter reference signal a.

With a time shift by Toffset1 DC/DC, converter reference signal a and DC/DC converter reference signal b have the same shape of the control waveform. In addition, power factor improvement circuit reference signal a and power factor improvement circuit reference signal b have the same shape of the control waveform with a time shift by

### Toffset1.

Toffset1 is determined by N (which is an integer of 2 or greater) that is the number of the mounted power supply circuits. To be more specific, Toffset1 is calculated based on a time obtained by dividing control period T by N (control period T /N). In the present embodiment, two power supply circuits are mounted, and Toffset1 is control period T/2.

### <Effect of Present Embodiment>

According to the present embodiment, the switching timings of the power factor improvement circuits are different from each other among N power supply circuits, and in addition, the switching timings of the DC/DC conversion apparatuses are different from each other among N power supply circuits, and thus, the switching timings do not coincide with each other among N power supply circuits. As a result, electromagnetic noise due to the switching can be reduced.

While, in the present embodiment, power factor improvement circuit reference signal a and DC/DC converter reference signal a are controlled at the same timing, the above-mentioned effect can also be achieved even when power factor improvement circuit reference signal a and DC/DC converter reference signal a are controlled at different timings in the same power supply circuit (power supply circuit 15a). The same applies to power supply circuit 15b.

It is to be noted that FIG. 3 illustrates an exemplary case of a control with a duty ratio of 50%, the control is variable in accordance with the output values of DC/DC converters 12a and 12b.

### (Embodiment 2)

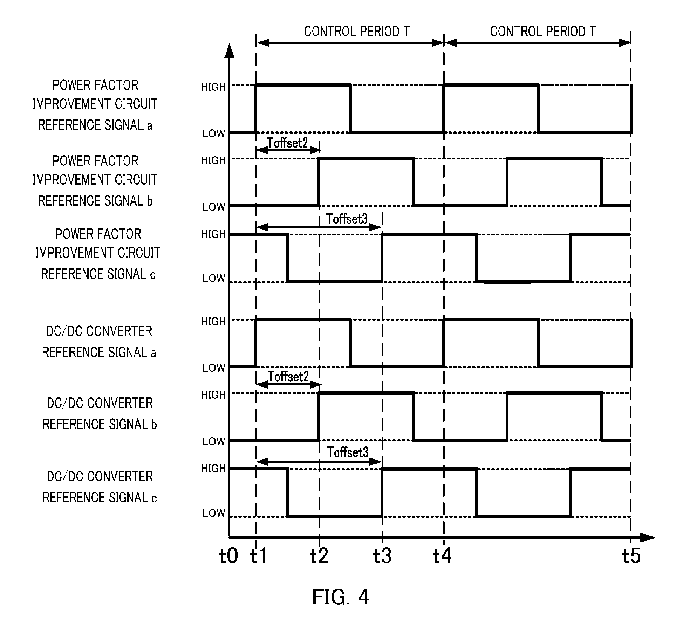

In the following, an in-vehicle power supply apparatus according to Embodiment 2 of the present invention will be described with reference to the drawings. FIG. 4 is a timing chart of a control timing according to Embodiment 2 of the present invention. It is to be noted that the same components as those of Embodiment 1 are denoted by the same reference numerals, and descriptions thereof are omitted. The difference from Embodiment 1 will be specifically described.

While two power supply circuits (15a and 15b) are adopted in Embodiment 1, an exemplary case where N (N=3) power supply circuits are mounted will be described in Embodiment 2. It is to be noted that, regarding N, the effect of the embodiments of the present invention can be achieved as long as N is an integer equal to or greater than 2.

Control section 14 controls the switching timings of the power factor improvement circuit and the DC/DC converter in predetermined control period T.

The switching timing of the power factor improvement circuit and the switching timing of the DC/DC converter are synchronized with each other and identical to each other in each power supply circuit. For example, the timings of power factor improvement circuit reference signal c and DC/DC converter reference signal c are coincide with each other.

On the basis of control period T, control section 14 outputs power factor improvement circuit reference signals a to c (which correspond to a first reference signal) and DC/DC converter reference signals a to c (which correspond to a second reference signal) such that the timings of power factor improvement circuit reference signals a to c and DC/DC converter reference signals a to c differ from each other in each of N power supply circuits.

To be more specific, among N (N=3) power supply circuits, the switching timing of the power factor improvement circuit and the switching timing of the DC/DC converter are different from each other by an integer multiple of a time obtained by dividing control period T by N (N=3).

For example, power factor improvement circuit reference signal b has a waveform shifted by Toffset2 (=(control period T/3)*1) relative to power factor improvement circuit reference signal a. In addition, power factor improvement circuit reference signal c has a waveform shifted by Toffset3 (=(control period T/3)*2) relative to power factor improvement circuit reference signal a.

Desirably, the control timings are shifted in terms of time as much as possible among power supply circuits. When the timings differ from each other by an integer multiple of a time obtained by dividing control period T by N (N=3), the time shift can be maximized, and the effect of reduction of electromagnetic noise can be maximized.

While the power factor improvement circuit reference signal and the DC/DC converter reference signal are controlled at the same timing in the same power supply circuit in the present embodiment, the above-mentioned effect can be achieved also when the signals are controlled at different timings.

### <Effect of Present Embodiment>

As described, a power supply apparatus provided with three or more power supply circuits can achieve an effect similar to that of Embodiment 1 in which the power supply apparatus is provided with two power supply circuits.

### (Embodiment 3)

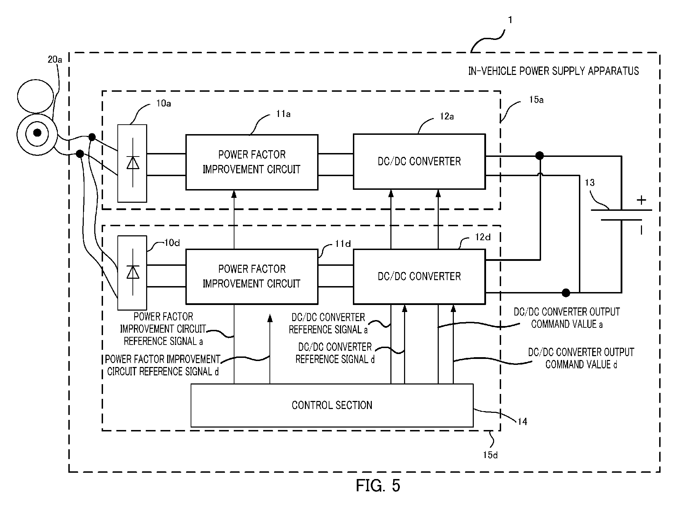

In the following, an in-vehicle power supply apparatus according to Embodiment 3 of the present invention will be described with reference to the drawings. FIG. 5 illustrates the in-vehicle power supply apparatus according to Embodiment 3 of the present invention and its surrounding configurations. It is to be noted that the same components as those of the above-mentioned embodiments are denoted by the same reference numerals, and descriptions thereof are omitted. The difference from Embodiment 1 will be specifically described.

The in-vehicle power supply apparatus according to Embodiment 3 is different from Embodiment 1 in that control section 14 is provided in one (power supply circuit 15d) of a plurality of power supply circuits. In this configuration, power supply circuit 15d serves as a master, and controls the other power supply circuit (15a). Also with the configuration of Embodiment 3, an effect similar to that of Embodiment 1 can be achieved.

### (Embodiment 4)

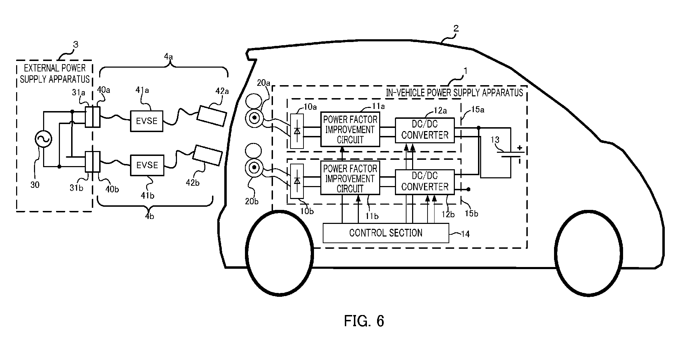

In the following, an in-vehicle power supply apparatus according to Embodiment 4 of the present invention will be described with reference to the drawings. FIG. 6 illustrates the in-vehicle power supply apparatus according to Embodiment 4 of the present invention and its surrounding configurations. It is to be noted that the same components as those of the above-mentioned embodiments are denoted by the same reference numerals, and descriptions thereof are omitted. The difference from Embodiment 1 will be specifically described.

Vehicle 2 according to Embodiment 4 differs from Embodiment 1 in that a plurality of (two) alternating-current charging ports are provided at the body. That is, vehicle 2 is provided with not only alternating-current charging port 20a, but also alternating-current charging port 20b. External power supply apparatus 3 also has two charging cables (4a and 4b).

In-vehicle power supply apparatus 1 includes two power supply circuits (15a and 15b) corresponding to alternating-current charging ports (20a and 20b) of vehicle 2. The power factor improvement circuit of the power supply circuit performs improvement of the power factors of the alternating-current electrical energy supplied from N different alternating-current charging ports.

Control section 14 can prohibit operation of a power supply circuit corresponding to the alternating-current charging port in which no charging plug is inserted. For example, when charging plug 42a is inserted only to alternating-current charging port 20a, control section 14 controls the circuits such that only power supply circuit 15a operates.

When charging plugs 42a and 42b are respectively inserted to alternating-current charging port 20a and 20b, control section 14 controls the circuits such that both power supply circuits 15a and 15b operate.

Control section 14 also can control the circuits such that power supply circuits, which correspond to alternating-current charging ports 20a and 20b in which charging plugs 42a and 42b are inserted, operate when it is detected that charging plugs 42a and 42b are inserted to alternating-current charging ports 20a and 20b and a signal indicating a normal state is received from EVSEs 41a and 41b.

Control section 14 also can control the circuits to prohibit the operation of a power supply circuit corresponding to an alternating-current charging port in which no charging plug is inserted, or a power supply circuit corresponding to a an alternating-current charging port whose abnormality is reported by a signal received from EVSEs 41a and 41b.

While vehicle 2 includes two alternating-current charging ports in the present embodiment, vehicle 2 may include N (N is an integer of 2 or greater) alternating-current charging ports. For example, when vehicle 2 includes three alternating-current charging ports, vehicle 2 includes three power supply circuits.

### <Effect of Present Embodiment>

According to the present embodiment, the maximum value of a current obtained from the commercial alternating-current power supply through the alternating-current charging port can be increased, and the charging time of the storage battery apparatus can be shortened.

Further, the plurality of the power factor improvement circuits corresponding to the plurality of alternating-current charging ports are provided, whereby charging of the storage battery apparatus can be surely performed even when the alternating-current charging port is increased in number. When the alternating-current charging port is increased in number, the maximum value of a current can be increased; however, when alternating-current electric energies of multiple systems are supplied, charging of the storage battery apparatus cannot be surely performed by simply connecting a conventional in-vehicle power supply apparatus since the alternating-current electric energies are different from each other in phase. In view of this, a plurality of power factor improvement circuits are provided to achieve an effect of ensuring charging of the storage battery apparatus even when the alternating-current charging port is increased in number.

### <Common Modifications of Embodiments 1 to 4>

While the reference signals are shifted by control section 14 in Embodiments 1 to 4, an effect similar to those of Embodiments 1 to 4 can be achieved with controls described below.

Control section 14 outputs reference signals of the same timing to N power supply circuits, and outputs, to the power supply circuits, setting information for setting of timings differing among the N power supply circuits. Based on the same timing reference signal and the value represented by the setting information, each power supply circuit controls the timings such that the switching timings of the power factor improvement circuit and the DC/DC converter differ among N power supply circuits.

It is to be noted that the configuration of the above-mentioned power factor improvement circuit of Embodiments may differ from the above-mentioned circuit configuration as long as the circuit has a function of improving the power factor.

In addition, while the rectifier circuit and the power factor improvement circuit are used to convert alternating-current electrical energy to direct-current electrical energy in Embodiments, the rectifier circuit may be omitted and only the power factor improvement circuit may be used to achieve the function of converting alternating-current electrical energy to direct-current electrical energy.

While an in-vehicle power supply apparatus is adopted in Embodiments 1 to 4, the present invention may be applied to power supply apparatuses other than in-vehicle power supply apparatuses as long as the power supply apparatus has N (N is an integer of 2 or greater) power supply circuits provided with a power factor improvement circuit and a DC/DC conversion apparatus.

### <Background and Problems of Embodiment 5>

In electric automobiles such as EVs and PHEVs, charging of a storage battery apparatus may disadvantageously take a long time. To shorten the time for charging a storage battery apparatus, it is necessary to increase the current value of the electrical energy supplied from a commercial alternating-current power supply.

Normally, however, the maximum value of a current which can be obtained from a commercial alternating-current power supply through one alternating-current charging port is limited (to 30 to 50 ampere, for example) by regulations and the like. That is, in the case where only one alternating-current charging port is provided as in PTL 2, shortening of the charging time of the storage battery apparatus may be disadvantageously limited.

An object of Embodiment 5 is to provide an in-vehicle power supply apparatus which can shorten the time for charging a storage battery apparatus.

In the following, Embodiment 5 of the present invention will be described in detail with reference to the accompanying drawings.

### (Embodiment 5)

### <Configuration of In-vehicle Power supply apparatus>

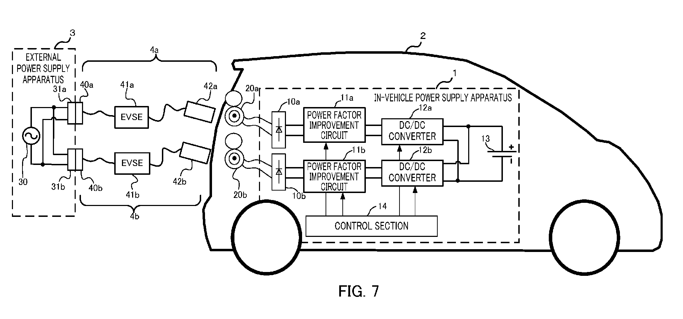

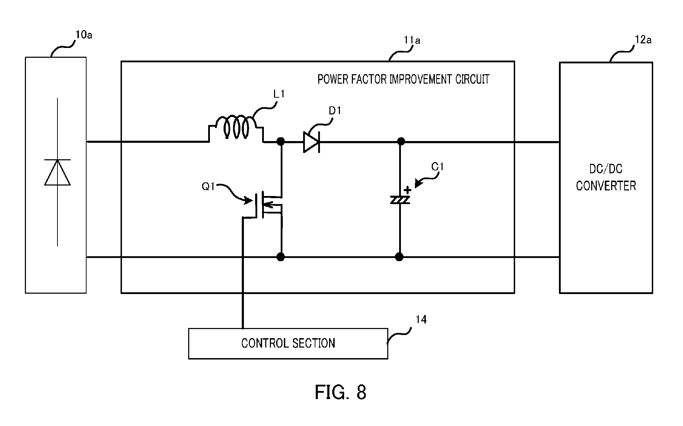

In-vehicle power supply apparatus 1 according to Embodiment 5 of the present invention and its surrounding configurations are described with reference to FIG. 7 and FIG. 8. FIG. 7 illustrates the in-vehicle power supply apparatus according to Embodiment 5 of the present invention and its surrounding configurations. FIG. 8 illustrates a power factor improvement circuit.

In-vehicle power supply apparatus 1 is mounted in vehicle 2. In-vehicle power supply apparatus 1 includes rectifier circuits 10a and 10b, power factor improvement circuits 11a and 11b, DC/DC converters 12a and 12b, storage battery apparatus 13, and control section 14. In configuration, rectifier circuit 10b, power factor improvement circuit 11b, and DC/DC converter 12b are similar to rectifier circuit 10a, power factor improvement circuit 11a, and DC/DC converter 12a, respectively.

Vehicle 2 is a vehicle such as an EV and a PHEV which can travel using the electrical energy stored in a storage battery apparatus as its driving source. In-vehicle power supply apparatus 1 charges storage battery apparatus 13 mounted in vehicle 2 with the alternating-current electrical energy supplied from external power supply apparatus 3 provided outside vehicle 2 through alternating-current charging ports (20a and 20b) of vehicle 2. Vehicle 2 and external power supply apparatus 3 are connected together with charging cables (4a and 4b).

External power supply apparatus 3 includes commercial power supply 30 (which corresponds to a power supply placed outside the vehicle) that supplies alternating-current electrical energy. Commercial power supply 30 is electrically connected with connectors 31a and 31b. The alternating-current electrical energy supplied from commercial power supply 30 is transmitted to in-vehicle power supply apparatus 1 with two conductive lines as one system. In the following, the configuration of each component will be described in detail.

Rectifier circuit 10a includes a bridge diode. The alternating-current electrical energy supplied to rectifier circuit 10a through alternating-current charging port 20a is wholly rectified by rectifier circuit 10a and converted to a pulsating current, and then output to power factor improvement circuit 11a.

Next, power factor improvement circuit 11 a is described in detail. Power factor improvement circuit 11a improves the power factor of the alternating-current electrical energy supplied from alternating-current charging port 20a through rectifier circuit 10a. The alternating-current electrical energy supplied from alternating-current charging port 20a is converted to direct-current electrical energy via rectifier circuit 10a and power factor improvement circuit 11a.

As illustrated in FIG. 8, power factor improvement circuit 11a includes choke coil L1, diode D1, capacitor C1, and switching transistor Q1. The operation of power factor improvement is controlled by control section 14. To be more specific, control section 14 controls on or off of switching transistor Q1, whereby the power factor is improved. A plurality of power factor improvement circuits (11a and 11b) corresponding to a plurality of alternating-current charging ports (20a and 20b) of vehicle 2 are provided.

DC/DC converter 12a (which corresponds to the DC/DC conversion apparatus) is an apparatus that is controlled by control section 14, and configured to convert at least one of the voltage and the current of the electrical energy whose power factor has been improved by the power factor improvement circuit.

Control section 14 controls DC/DC converter 12a in accordance with the state of storage battery apparatus 13. A plurality of the DC/DC converters corresponding to a plurality of power factor improvement circuits (11a and 11b) are provided.

Storage battery apparatus 13 is an apparatus such as a lead battery, a nickel hydrogen battery, and a lithium ion battery that stores electrical energy by chemical reaction, for example. The electrical energy accumulated in storage battery apparatus 13 is supplied to an electric motor not illustrated and thus used for driving vehicle 2.

As described above, control section 14 controls power factor improvement circuit 11a and DC/DC converter 12a. In addition, control section 14 can detect whether charging plugs 42a and 42b are inserted to alternating-current charging ports 20a and 20b. For this reason, alternating-current charging ports 20a and 20b are provided with insertion/extraction detection sensors not illustrated.

In addition, through communication with EVSEs 41a and 41b, control section 14 can receive a signal indicating whether EVSEs 41a and 41b are normally operating.

Control section 14 is configured as an LSI that is an integrated circuit such as a microcomputer, for example. The type of the integrated circuit is not limited to LSI, and a dedicated circuit or a general-purpose processor may also be adopted.

In vehicle 2, in-vehicle power supply apparatus 1 is mounted, and alternating-current charging ports 20a and 20b are provided at the body. Charging cables 4a and 4b described later are connected to alternating-current charging ports 20a and 20b, and alternating-current electrical energy is supplied from external power supply apparatus 3.

Next, charging cables (4a and 4b) are described. Charging cable 4a includes connector 40a, EVSE 41a, and charging plug 42a. It is to be noted that charging cable 4b has a configuration similar to that of charging cable 4a. In the following, charging cable 4a will be described.

Connector 40a is electrically connected with charging plug 42a through EVSE 41a. Connector 40a is electrically connected with connector 31 a of external power supply apparatus 3 when in use. In addition, charging plug 42a is electrically connected with alternating-current charging port 20a of in-vehicle power supply apparatus 1 when in use.

EVSE (Electric Vehicle Supply Equipment) is an apparatus that couples external power supply apparatus 3 and in-vehicle power supply apparatus 1. The EVSE corresponds to a leakage detection apparatus.

In EVSE 41a, a diagnosis section and a relay not illustrated are provided. The diagnosis section has a function of, in a case where abnormality such as leakage is detected, bringing the relay into an opened state so as not to allow the electrical energy supplied from connector 40a to be transmitted to charging plug 42a side, and notifying control section 14 of the abnormality.

In addition, when no abnormality is detected, the diagnosis section brings the relay into a closed state to transmit the electrical energy supplied from connector 40a to charging plug 42a side.

### <Operation of In-vehicle Power supply apparatus>

Next, an operation of in-vehicle power supply apparatus 1 will be described in detail.

When insertion of charging plugs 42a and 42b to alternating-current charging ports 20a and 20b is detected, control section 14 of in-vehicle power supply apparatus 1 controls power factor improvement circuits 11a and 11b, which correspond to alternating-current charging ports in which charging plugs 42a and 42b are inserted, to perform power factor improvement. In addition, control section 14 activates DC/DC converters (12a and 12b) corresponding to the power factor improvement circuits that are controlled to improve the power factor.

Control section 14 also can control the circuits to prohibit the operation of a power factor improvement circuit corresponding to an alternating-current charging port in which no charging plug is inserted. At this time, it is possible to stop the operation of a DC/DC converter corresponding to an alternating-current charging port in which no charging plug is inserted.

For example, when charging plug 42a is inserted only to alternating-current charging port 20a, control section 14 controls the circuits such that only power factor improvement circuit 11a performs power factor improvement, and only DC/DC converter 12a operates.

In addition, when charging plugs 42a and 42b are inserted to both alternating-current charging ports 20a and 20b, control section 14 controls both power factor improvement circuits 11a and 11b to perform power factor improvement, and controls DC/DC converters 12a and 12b to operate.

Control section 14 may control the circuits such that power factor improvement circuits, which correspond to alternating-current charging ports 20a and 20b in which charging plugs 42a and 42b are inserted, perform power factor improvement when it is detected that charging plugs 42a and 42b are inserted to alternating-current charging ports 20a and 20b and a signal indicating a normal state is received from EVSEs 41a and 41b. At this time, the DC/DC converter corresponding to the power factor improvement circuit that is controlled to perform power factor improvement is activated.

Control section 14 also can control the circuits to prohibit the operation of a power factor improvement circuit corresponding to an alternating-current charging port in which no charging plug is inserted, or a power factor improvement circuit corresponding to an alternating-current charging port whose abnormality is reported by a signal received from EVSEs 41a and 41b. At this time, control section 14 can stop the operation of the DC/DC converter corresponding to the power factor improvement circuit whose operation is prohibited.

### <Effect of Present Embodiment>

According to the present embodiment of the present invention, since the DC/DC converters that are electrically connected with a plurality of alternating-current charging ports of the vehicle are provided, the maximum value of a current obtained from the commercial alternating-current power supply through the alternating-current charging port can be increased, and the charging time of the storage battery apparatus can be shortened.

Further, the plurality of the power factor improvement circuits corresponding to the plurality of alternating-current charging ports are provided, whereby charging of the storage battery apparatus can be surely performed even when the alternating-current charging port is increased in number. When the alternating-current charging port is increased in number, the maximum value of a current can be increased; however, when alternating-current electric energies of multiple systems are supplied, charging of the storage battery apparatus cannot be surely performed by simply connecting a conventional in-vehicle power supply apparatus since the alternating-current electric energies are different from each other in phase. In view of this, a plurality of power factor improvement circuits are provided to achieve an effect of ensuring charging of the storage battery apparatus even when the alternating-current charging port is increased in number.

### <Modification of Present Embodiment>

It is to be noted that the configuration of the above-mentioned power factor improvement circuit of the present embodiment may differ from the above-mentioned circuit configuration as long as the circuit has a function of improving the power factor.

While vehicle 2 includes two alternating-current charging ports in the present embodiment, the number of alternating-current charging ports is not limited as long as two or more alternating-current charging ports are provided. For example, when vehicle 2 includes three alternating-current charging ports, vehicle 2 includes three power supply circuits.

In addition, while the rectifier circuit and the power factor improvement circuit are used to convert alternating-current electrical energy to direct-current electrical energy in the present embodiment, the rectifier circuit may be omitted and only the power factor improvement circuit may be used to achieve the function of converting alternating-current electrical energy to direct-current electrical energy.

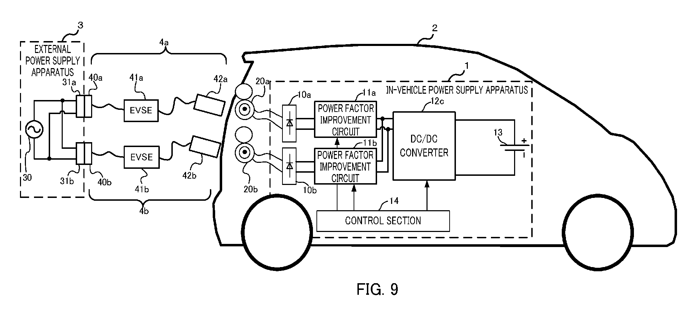

In addition, while a plurality of the DC/DC converters are provided in FIG. 7 of the present embodiment, a configuration illustrated in FIG. 9 may also be adopted in which one DC/DC converter (DC/DC converter 12c) is provided and outputs of the power factor improvement circuits (11a and 11b) are input to DC/DC converter 12c.

While the number of the power factor improvement circuits has to be equal to that of the alternating-current charging ports in the configuration illustrated in FIG. 9 as with the configuration illustrated in FIG. 7, the number of the DC/DC converters can be reduced, and the size of in-vehicle power supply apparatus 1 can be reduced.

### <Outline of Aspects of Invention>

Outlines of the aspects of the present invention will be described below.

Aspect 1 is a power supply apparatus including: a power supply circuit; and a control section, the power supply circuit including a power factor improvement circuit that improves a power factor of alternating-current electrical energy by switching of a transistor; and a DC/DC conversion apparatus that converts by switching of a transistor at least one of a voltage and a current of the electrical energy whose power factor is improved by the power factor improvement circuit, the control section being configured to control switching timings of the power factor improvement circuit and the DC/DC conversion apparatus, in which a plurality of (or N, which is an integer of 2 or greater) the power supply circuits are provided, and the control section controls the switching timings such that the switching timing of the power factor improvement circuit differs among the N power supply circuits, and that the switching timing of the DC/DC conversion apparatus differs among the N power supply circuits.

Aspect 2 is the power supply apparatus according to aspect 1, in which the control section controls the switching timings of the power factor improvement circuit and the DC/DC conversion apparatus in a control period T such that the switching timings of the power factor improvement circuit and the DC/DC conversion apparatus differ among the N power supply circuits by an integer multiple of a time obtained by dividing the control period T by N.

Aspect 3 is the power supply apparatus according to aspect 1 or 2, in which the control section controls the switching timing of the power factor improvement circuit and the switching timing of the DC/DC conversion apparatus such that the timings are synchronized with each other in each power supply circuit.

Aspect 4 is the power supply apparatus according to aspect 3, in which the control section controls the switching timing of the power factor improvement circuit and the switching timing of the DC/DC conversion apparatus such that the timings are identical to each other in each power supply circuit.

Aspect 5 is the power supply apparatus according to any one of aspects 1 to 4, in which the control section further controls a value of at least one of an output current and an output voltage of the DC/DC conversion apparatus such that the value is identical among the N power supply circuits.

Aspect 6 is the power supply apparatus according to any one of aspects 1 to 5, in which the control section controls the switching timings of the power factor improvement circuit and the DC/DC conversion apparatus by outputting a first reference signal and a second reference signal to the power supply circuit, the first reference signal serving as a reference for the switching of the power factor improvement circuit, the second reference signal serving as a reference for the switching of the DC/DC conversion apparatus.

Aspect 7 is the power supply apparatus according to aspect 6, in which the control section outputs the first reference signal and the second reference signal such that the timings of the first reference signal and the second reference signal differ among the N power supply circuits.

Aspect 8 is the power supply apparatus according to any one of aspects 1 to 5, in which the control section outputs to the N power supply circuits reference signals that are identical to each other, and outputs to the N power supply circuits setting information for setting of timings differing among the N power supply circuits such that the switching timings of the power factor improvement circuit and the DC/DC conversion apparatus differ among the N power supply circuits.

Aspect 9 is an electric automobile including: a plurality of (or N, which is an integer of 2 or greater) alternating-current charging ports provided at a body; and the power supply apparatus according to any one of aspects 1 to 8.

Aspect 10 is the electric automobile according to aspect 9, in which the power factor improvement circuits of the N power supply circuits improve power factors of alternating-current electrical energy supplied from the N different alternating-current charging ports.

Aspect 11 is an in-vehicle power supply apparatus that charges a storage battery apparatus mounted in a vehicle with alternating-current electrical energy that is supplied through an alternating-current charging port of the vehicle from a power supply disposed outside the vehicle, the in-vehicle power supply apparatus including a DC/DC conversion apparatus electrically connected with a plurality of the alternating-current charging ports of the vehicle.

Aspect 12 is the in-vehicle power supply apparatus according to aspect 11 further including a power factor improvement circuit that improves a power factor of alternating-current electrical energy supplied from the alternating-current charging ports, in which the DC/DC conversion apparatus is electrically connected with the plurality of the alternating-current charging ports of the vehicle through the power factor improvement circuit, and converts at least one of a voltage and a current of the electrical energy whose power factor is improved by the power factor improvement circuit, and a plurality of the power factor improvement circuits corresponding to the plurality of the alternating-current charging ports of the vehicle are provided.

Aspect 13 is the in-vehicle power supply apparatus according to aspect 12 further including a control section that detects whether a charging plug is inserted to the alternating-current charging ports, and controls whether the power factor improvement circuit improves a power factor, in which, when insertion of the charging plug to the alternating-current charging ports is detected, the control section controls the power factor improvement circuit corresponding to the alternating-current charging port in which the charging plug is inserted to improve a power factor.

Aspect 14 is the in-vehicle power supply apparatus according to aspect 12 further including a control section that detects whether a charging plug is inserted to the alternating-current charging ports, and controls whether the power factor improvement circuit improves a power factor, in which, when insertion of the charging plug to the alternating-current charging ports is detected and a signal indicating a normal state is received from a leakage detection apparatus, the control section controls the power factor improvement circuit corresponding to the alternating-current charging port in which the charging plug is inserted to improve a power factor, the leakage detection apparatus being disposed between the charging plug and the power supply disposed outside the vehicle.

Aspect 15 is the in-vehicle power supply apparatus according to any one of aspects 12 to 14, in which a plurality of the DC/DC conversion apparatuses corresponding to the plurality of power factor improvement circuits are provided.

Aspect 16 is the in-vehicle power supply apparatus according to any one of aspects 12 to 14, in which the DC/DC conversion apparatus is provided as a single DC/DC conversion apparatus, and outputs of the power factor improvement circuits are input to the single DC/DC conversion apparatus.

Aspect 17 is an electric automobile including: a plurality of the alternating-current charging ports disposed at a body; and the in-vehicle power supply apparatus according to any one of aspects 11 to 16.

This application is entitled to and claims the benefit of Japanese Patent Application Nos. 2013-025909 filed on February 13, 2013 and 2013-044154 filed on March 6, 2013, the disclosure of which including the specification, drawings and abstract is incorporated herein by reference in its entirety.

### Industrial Applicability

The power supply apparatus according to the embodiments of the present invention is suitable for a power supply apparatus, an in-vehicle power supply apparatus, an electric automobile and the like which charge a storage battery apparatus with alternating-current electrical energy supplied from an alternating current power supply.

### Reference Signs List

1: In-vehicle power supply apparatus
10a, 10b: Rectifier circuit
11a and 11b, 11d: Power factor improvement circuit
12a and 12b, 12d: DC/DC converter
111a, 121a: IC
13: Storage battery apparatus
14: Control section
15a, 15b, 15d: Power supply circuit
2: Vehicle
20a, 20b: Alternating-current charging port
3: External power supply apparatus
30: Commercial power supply
31a, 31b: Connector
4a, 4b: Charging cable
40a, 40b: Connector
41a, 41b: EVSE
42a, 42b: Charging plug

## Claims

1. A power supply apparatus comprising:
a power supply circuit; and
a control section,
the power supply circuit including
a power factor improvement circuit that improves a power factor of alternating-current electrical energy by switching of a transistor; and
a DC/DC conversion apparatus that converts by switching of a transistor at least one of a voltage and a current of the electrical energy whose power factor is improved by the power factor improvement circuit,
the control section being configured to control switching timings of the power factor improvement circuit and the DC/DC conversion apparatus, wherein
a plurality of (or N, which is an integer of 2 or greater) the power supply circuits are provided, and
the control section controls the switching timings such that the switching timing of the power factor improvement circuit differs among the N power supply circuits, and that the switching timing of the DC/DC conversion apparatus differs among the N power supply circuits.

2. The power supply apparatus according to claim 1, wherein the control section controls the switching timings of the power factor improvement circuit and the DC/DC conversion apparatus in a control period T such that the switching timings of the power factor improvement circuit and the DC/DC conversion apparatus differ among the N power supply circuits by an integer multiple of a time obtained by dividing the control period T by N.

3. The power supply apparatus according to claim 1 or 2, wherein the control section controls the switching timing of the power factor improvement circuit and the switching timing of the DC/DC conversion apparatus such that the timings are synchronized with each other in each power supply circuit.

4. The power supply apparatus according to claim 3, wherein the control section controls the switching timing of the power factor improvement circuit and the switching timing of the DC/DC conversion apparatus such that the timings are identical to each other in each power supply circuit.

5. The power supply apparatus according to any one of claims 1 to 4, wherein the control section further controls a value of at least one of an output current and an output voltage of the DC/DC conversion apparatus such that the value is identical among the N power supply circuits.

6. The power supply apparatus according to any one of claims 1 to 5, wherein the control section controls the switching timings of the power factor improvement circuit and the DC/DC conversion apparatus by outputting a first reference signal and a second reference signal to the power supply circuit, the first reference signal serving as a reference for the switching of the power factor improvement circuit, the second reference signal serving as a reference for the switching of the DC/DC conversion apparatus.

7. The power supply apparatus according to claim 6, wherein the control section outputs the first reference signal and the second reference signal such that the timings of the first reference signal and the second reference signal differ among the N power supply circuits.

8. The power supply apparatus according to any one of claims 1 to 5, wherein the control section outputs to the N power supply circuits reference signals that are identical to each other, and outputs to the N power supply circuits setting information for setting of timings differing among the N power supply circuits such that the switching timings of the power factor improvement circuit and the DC/DC conversion apparatus differ among the N power supply circuits.

9. An electric automobile comprising:
a plurality of (or N, which is an integer of 2 or greater) alternating-current charging ports provided at a body; and
the power supply apparatus according to any one of claims 1 to 8.

10. The electric automobile according to claim 9, wherein the power factor improvement circuits of the N power supply circuits improve power factors of alternating-current electrical energy supplied from the N different alternating-current charging ports.

11. An in-vehicle power supply apparatus that charges a storage battery apparatus mounted in a vehicle with alternating-current electrical energy that is supplied through an alternating-current charging port of the vehicle from a power supply disposed outside the vehicle, the in-vehicle power supply apparatus comprising
a DC/DC conversion apparatus electrically connected with a plurality of the alternating-current charging ports of the vehicle.

12. The in-vehicle power supply apparatus according to claim 11 further comprising
a power factor improvement circuit that improves a power factor of alternating-current electrical energy supplied from the alternating-current charging ports,
wherein
the DC/DC conversion apparatus is electrically connected with the plurality of the alternating-current charging ports of the vehicle through the power factor improvement circuit, and converts at least one of a voltage and a current of the electrical energy whose power factor is improved by the power factor improvement circuit, and
a plurality of the power factor improvement circuits corresponding to the plurality of the alternating-current charging ports of the vehicle are provided.

13. The in-vehicle power supply apparatus according to claim 12 further comprising
a control section that detects whether a charging plug is inserted to the alternating-current charging ports, and controls whether the power factor improvement circuit improves a power factor, wherein,
when insertion of the charging plug to the alternating-current charging ports is detected, the control section controls the power factor improvement circuit corresponding to the alternating-current charging port in which the charging plug is inserted to improve a power factor.

14. The in-vehicle power supply apparatus according to claim 12 further comprising
a control section that detects whether a charging plug is inserted to the alternating-current charging ports, and controls whether the power factor improvement circuit improves a power factor, wherein,
when insertion of the charging plug to the alternating-current charging ports is detected and a signal indicating a normal state is received from a leakage detection apparatus, the control section controls the power factor improvement circuit corresponding to the alternating-current charging port in which the charging plug is inserted to improve a power factor, the leakage detection apparatus being disposed between the charging plug and the power supply disposed outside the vehicle.

15. The in-vehicle power supply apparatus according to any one of claims 12 to 14, wherein a plurality of the DC/DC conversion apparatuses corresponding to the plurality of power factor improvement circuits are provided.

16. The in-vehicle power supply apparatus according to any one of claims 12 to 14, wherein
the DC/DC conversion apparatus is provided as a single DC/DC conversion apparatus, and
outputs of the power factor improvement circuits are input to the single DC/DC conversion apparatus.

17. An electric automobile comprising:
a plurality of the alternating-current charging ports disposed at a body; and
the in-vehicle power supply apparatus according to any one of claims 11 to 16.
